# EUROPÄISCHE PATENTSCHRIFT

(11) **EP 3 025 069 B1**
(45) Veröffentlichungstag und Bekanntmachung des Hinweises auf die Patenterteilung: **07.04.2021**
(21) Anmeldenummer: 14752551.3
(22) Anmeldetag: 11.07.2014
(51) Int. Cl.: F16F 9/02

(54) **VORRICHTUNG ZUM AUSLÖSEN EINER GASFEDER**
DEVICE FOR TRIGGERING A GAS SPRING
DISPOSITIF PERMETTANT DE DÉCLENCHER UN RESSORT À GAZ

(30) Priorität: 23.07.2013 DE 202013006582 U
(43) Veröffentlichungstag der Anmeldung: 01.06.2016
(73) Patentinhaber: Wandschneider, Guido, 74927 Eschelbronn (DE)
(72) Erfinder: Wandschneider, Guido, 74927 Eschelbronn (DE)
(74) Vertreter: Clemens, Gerhard
(86) Internationale Anmeldenummer: PCT/DE2014/000350
(87) Internationale Veröffentlichungsnummer: WO 2015/010672

(56) Entgegenhaltungen:
- EP-A2- 0 208 127
- EP-B1- 0 907 842
- WO-A1-03/002360
- DE-A1- 19 716 720
- DE-A1-102006 003 097
- DE-U1-202005 014 056
- JP-A- H06 264 950
- US-A- 4 901 594
- US-B2- 9 403 568

## Beschreibung

### TECHNISCHES GEBIET

Die vorliegende Erfindung betrifft eine Vorrichtung zum Auslösen einer Gasfeder mit einer Betätigungseinrichtung, einem mit der Betätigungseinrichtung wirkverbundenen auf einen endseitigen Auslöser der Gasfeder einwirkendem Betätigungsorgan, wobei das Betätigungsorgan auf den Auslöser mittelbar oder unmittelbar einwirkt und insbesondere als kraft- und/oder wegmäßig unter- oder übersetzende Hebelanordnung mit einem Betätigungshebel ausgebildet ist, die mit der Betätigungseinrichtung in Wirkverbindung steht, und zumindest einem unmittelbar oder mittelbar mit dem Betätigungshebel zusammenwirkenden Auslösehebel, der auf den Auslöser einwirkt und einem Gehäuse, das Gehäuse, insbesondere in seiner unteren Stirnwandung, eine Gasfederanschlusseinheit aufweist, über die der obere Endbereich der Gasfeder mit bis ins Innere des Gehäuses durchgeführtem Auslöser anschließbar ist und die Gasfederanschlusseinheit als durchgehende Ausnehmung, insbesondere mit einem Innengewinde, ausgebildet ist.

### STAND DER TECHNIK

Gasfedern sind in den unterschiedlichsten Ausführungsformen aus der Praxis bekannt. Zahlreiche Gasfedern umfassen ein integriertes Ventilsystem, wodurch sich die Gasfeder in jeder Position stufenlos feststellen bzw. blockieren lässt. Dabei ist der Kolben an einem Druckrohr abgedichtet und trennt zwei Gasräume voneinander. Bei geschlossenem Ventil ist die Gasfeder arretiert und ermöglicht eine Blockierung in der gewünschten Position. Durch Betätigung des meist als Auslösestössel ausgeführten Auslösers wird das Ventil geöffnet und die Gasfeder lässt sich so stufenlos positionieren. Die Ausschubgeschwindigkeit und Dämpfung kann dabei durch Wahl der Düse im Kolben entsprechend variiert werden.

Gasfedern der hier in Rede stehenden Art werden aufs unterschiedlichste angewendet. Aus der Praxis bekannt ist die Anwendung solcher Gasfedern in Schreibtischstühlen. Ebenso lassen sich durch Gasfedern Autositze oder Flugzeugsitze verstellen oder können Teile von Solarien bewegt werden. Auch lassen sich Schreibtische durch Gasfedern höhenverstellen.

Bei den aus der Praxis bekannten Gasfedern ist ein Betätigungsorgan erforderlich, welches mit einer Betätigungseinrichtung wirkverbunden ist und unmittelbar auf den endseitig der Gasfeder vorgesehenen Auslöser wirkt. Dabei werden beispielsweise bei Schreibtischstühlen Betätigungsorgane verwendet, die in Form einfacher Hebel ausgebildet sind, die in der Regel mit einem endseitigen Bereich unmittelbar auf den Auslöser drücken. Eine solche Ausgestaltung des Betätigungsorgans hat den enormen Nachteil, dass doch erhebliche Kräfte zum Auslösen der Gasfeder erforderlich sind. Hinzu kommt der weitere Nachteil, dass sich die Auslösung nur schwer dosieren lässt, so dass eine Regulierung der Gasfedergeschwindigkeit bei erheblichen Auslösekräften so gut wie nicht möglich ist.

Aus der EP 0 907 842 B1 ist eine Vorrichtung zum Auslösen einer Gasfeder der eingangs genannten Art bekannt. Das Betätigungsorgan der bekannten Vorrichtung umfasst neben dem Auslösehebel noch zwei weitere Hebel, die mit dem Auslösehebel schwenkbar gekoppelt sind.

Des Weiteren sind aus der DE 197 16 720 A1 und aus der EP 1 328 738 B1 weitere Vorrichtungen zum Auslösen einer Gasfeder bekannt, bei denen ebenfalls ein Hebelmechanismus eingesetzt wird. Bei der aus der DE 197 16 720 A1 bekannten Vorrichtung sind zwei Hebel vorhanden, die über ein Kontaktbereich zusammenwirken. Die Wirkverbindung zwischen den Hebeln ist entweder über eine Verzahnung oder über aneinanderliegende Reibflächen realisiert. Die Vorrichtung gemäß der EP 1 328 738 B1 ist so ausgebildet, dass der Kontaktbereich und/oder der Betätigungshebel des Hebelmechanismus eine frei drehbare Rolle oder Kugel zum Abwälzen auf den Betätigungsbereich und/ oder den Kontaktbereich aufweist. Die Druckschrift EP 0 208 127 A2 bildet den naheliegendsten Stand der Technik und offenbart eine derartige Vorrichtung.

### DARSTELLUNG DER ERFINDUNG

Ausgehend von dem genannten Stand der Technik liegt der vorliegenden Erfindung die Aufgabe beziehungsweise das technische Problem zugrunde eine Vorrichtung zum Auslösen einer Gasfeder der eingangs genannten Art auszugestalten und weiterzubilden, die bei unterschiedlichsten geometrischen Platzverhältnissen der umgebenden Bauteile eingesetzt werden kann, die wirtschaftlich hergestellt werden kann, die eine dauerhaft zuverlässige Funktion gewährleistet, die raumsparend ausgebildet ist und einen zuverlässigen, kompakten Anschluss der Gasfeder gewährleistet.

Die erfindungsgemäße Vorrichtung zum Auslösen einer Gasfeder ist durch die Merkmale des unabhängigen Anspruchs 1 gegeben.

Vorteilhafte Ausgestaltungen und Weiterbildungen sind Gegenstand der von dem unabhängigen Anspruch 1 direkt oder indirekt abhängigen Ansprüche.

Die erfindungsgemäße Vorrichtung zum Auslösen einer Gasfeder, die eine kompakte Umsetzung bei gleichzeitig dauerhaft zuverlässiger Funktion gewährleistet, zeichnet sich dadurch aus, dass im Bereich der Ausnehmung Mittel zum klemmenden und/oder formschlüssigen Fixieren des in die Ausnehmung eingebrachten oberen Endbereichs der Gasfeder vorhanden sind. Bei dieser Ausführungsvariante ist ein dauerhaft zuverlässiger Anschluss der Gasfeder auch bei beengten Platzverhältnissen problemlos möglich, da der bekannte Anschluss mittels einer Kontermutter entfallen kann.

Der erfindungsgemässe Anschluss der Gasfeder an das Gehäuse zeichnet sich dadurch aus, dass im Bereich der Gasfederanschlusseinheit quer zur Längsrichtung der Gasfeder zumindest eine Queranschlussausnehmung vorhanden ist, in die ein Gewindestift zur Sicherung des Anschlusses des in die Gasfederanschlusseinheit eingeführten Teils der Gasfeder eingeschraubt ist. Die Queranschlussausnehmung kann auch auf beiden Seiten der Gasfederanschlusseinheit vorhanden sein, in die jeweils ein Gewindestift eingeschraubt ist.

Eine nicht erfindungsgemässe Ausgestaltung des Gasfederanschluss zeichnet sich dadurch aus, dass der in die Gasfederanschlusseinheit eingeführte Teil der Gasfeder eine Nutausnehmung aufweist, in die die Spitze eines einseitig oder von beiden Seiten eingedrehten Gewindestifts zum Anschluss formschlüssig eingreift. Hier kann auf ein Eindrehen der Gasfeder verzichtet werden, das heißt ein Innengewinde der Ausnehmung ist nicht erforderlich.

Eine mögliche dritte aber nicht erfindungsgemässe Ausgestaltung, die konstruktiv besonders einfach umgesetzt werden kann, zeichnet sich dadurch aus, dass der in die Gasfederanschlusseinheit eingebrachte Teil der Gasfeder mittels zumindest eines zylindrischen in einer Ausnehmung des eingebrachten Gasfederteils und des Gehäuses verlaufenden Stiftes oder über zumindest eine in einer Nut des eingebrachten Teils der Gasfeder formschlüssig angeordneter U-förmiger Klammer angeschlossen ist, die beispielsweise über zwei Bohrungen einschiebbar ist.

Eine besonders vorteilhafte Ausgestaltung, die eine hohe Variabilität in unterschiedlichen geometrischen Einbausituationen gewährleistet, zeichnet sich dadurch aus, dass an dem Gehäuse eine erste Gehäuseanschlusseinheit zum Anschluss einer Anschlusseinheit der Betätigungseinrichtung vorhanden ist, wobei die anschließbare beziehungsweise angeschlossene Betätigungseinrichtung im Wesentlichen parallel zur Längsrichtung der Gasfeder innerhalb des Gehäuses geführt ist und an dem Gehäuse eine zweite Gehäuseanschlusseinheit zum Anschließen einer Anschlusseinheit der Betätigungseinrichtung, wobei die anschließbare beziehungsweise angeschlossene Betätigungseinrichtung im Wesentlichen quer zu der Längsrichtung der Gasfeder innerhalb des Gehäuses geführt ist.

Dadurch, dass die erfindungsgemäße Vorrichtung alternativ zusätzlich zwei Anschlussmöglichkeiten für die Betätigungseinrichtung in unterschiedlichen Anschlussrichtungen aufweist, kann die Vorrichtung selbst bei unterschiedlichsten geforderten vorhandenen Geometrien der sie umgebenden Bauteile jeweils im Einzelfall angepasst und eingesetzt werden, ohne dass zusätzliche Einschränkungen hingenommen werden müssen und die Montage einfach gestaltet werden kann, ohne Abstriche an die gestellten Sicherheitsanforderungen wie zum Beispiel dauerhafte Funktionalität, Brandschutz und dergleichen.

Eine besonders bevorzugte Ausgestaltung zeichnet sich dadurch aus, dass das Gehäuse zwei gegenüberliegende Wandungen, eine untere Stirnwandung und insbesondere eine obere Stirnwandung aufweist und die erste Gehäuseanschlusseinheit an der unteren Stirnwandung vorhanden ist und insbesondere durch eine die untere Stirnwandung durchdringende Ausnehmung gebildet wird, die insbesondere ein Innengewinde aufweist, und die zweite Gehäuseanschlusseinheit im linken oder rechten Randbereich der gegenüberliegenden Wandungen angeordnet ist.

Mit dieser einfachen Ausgestaltung ist eine besonders zuverlässige Anschlussmöglichkeit für die Betätigungseinrichtung geschaffen, die einen geringen Raumbedarf benötigt und einen zuverlässigen Anschluss gewährleistet.

Gemäß einer bevorzugten Ausgestaltung zeichnet sich die Vorrichtung dadurch aus, dass die zweite Gehäuseanschlusseinheit durch ein an den gegenüberliegenden Wandungen gelagertes, insbesondere lösbar gelagertes, Widerlagerelement mit einer durchgehenden Ausnehmung gebildet ist.

Die Lagerung des Widerlagerelements kann beispielsweise durch Einführung in eine oder zwei sich gegenüberliegenden Nuten der Wandung des Gehäuses bis zu einem Anschlag umgesetzt sein. Dadurch ist eine problemlose lösbare, das heißt im Einsatzfall schnell umrüstbare Ausgestaltung gegeben. Es ist auch möglich, das Widerlagerelement in anderer Art und Weise beispielsweise durch eine Schraubverbindung lösbar anzuschließen. Das Widerlagerelement kann auch fest in dem Gehäuse integriert vorhanden sein.

Eine besonders bevorzugte Ausgestaltung zeichnet sich dadurch aus, die erste und/oder zweite Gehäuseanschlusseinheit so ausgebildet ist, dass eine Stellschraubeneinheit oder eine Stecktülleneinheit der Betätigungseinrichtung anschließbar beziehungsweise angeschlossen ist. Durch den Einsatz einer Stellschraubeneinheit beziehungsweise Stecktülleneinheit ist eine problemlose Einjustierung der Betätigungseinrichtung bezüglich des einzustellenden Betätigungsweges problemlos möglich.

Eine besonders vorteilhafte Weiterbildung, die eine dauerhaft zuverlässige Funktion gewährleistet, zeichnet sich dadurch aus, dass der Hebelmechanismus vollständig innerhalb des Gehäuses angeordnet ist. Dadurch, dass sämtliche Hebel des Hebelmechanismus innerhalb des Gehäuses vorhanden sind, sind keine störenden, nach außen ragenden Bauteile vorhanden und die Bauteile selbst sind weitestgehend vor Verschmutzung oder Kollision mit umgebenden Bauteilen geschützt.

Um den Zusammenbau beziehungsweise den Anschluss der Betätigungseinrichtung, die bevorzugt als Bowdenzug ausgebildet ist, zu erleichtern, zeichnet sich eine besonders vorteilhafte Ausgestaltung dadurch aus, dass an die erste Gehäuseanschlusseinheit ein nach außen offener seitlicher Schlitz vorhanden ist, durch den beispielsweise der Seilzug eines Bowdenzugs beim Anschluss des Bowdenzugs an den Hebelmechanismus, dieser problemlos von außen zugeführt und anschließend angeschlossen werden kann.

In einer vorteilhaften Ausgestaltung weist das Gehäuse oberseitig eine Montageöffnung auf, die ermöglicht, dass während der Montage des Hebelmechanismus von außen her ein Zugriff auf diesen möglich ist, damit dieser entsprechend in einfacher Art und Weise positioniert werden kann.

Eine erste alternative Ausgestaltung des Betätigungsorgans mit seinem Hebelmechanismus zeichnet sich dadurch aus, dass der Auslösehebel an einem Ende um eine ortsfeste Drehachse schwenkbar an dem Gehäuse angelenkt und an seinem anderen Ende mit einem zweiten Hebel - Verbindungshebel - an dessen Ende schwenkbar verbunden ist, dass der Verbindungshebel an seinem anderen Ende schwenkbar mit einem dritten Hebel - Betätigungshebel - verbunden ist und das der Betätigungshebel an einem Ende um eine ortsfeste Drehachse schwenkbar am Gehäuse angelenkt und an seinem anderen Ende mit der Betätigungseinrichtung wirkverbindbar beziehungsweise wirkverbunden ist, wobei der Verbindungshebel alternativ beispielsweise als Stanzteil oder als Drahtbiegeteil beispielsweise Klammer ausgebildet sein kann.

Eine zweite Alternative der Ausgestaltung des Betätigungsorgans mit seinem Hebelmechanismus zeichnet sich dadurch aus, dass der Auslösehebel an einem Ende um eine ortsfeste Drehachse schwenkbar gelagert ist, wobei dieser Auslösehebel an seinem anderen Ende einen Kontaktbereich zum Zusammenwirken mit einem zweiten Hebel - Betätigungshebel - aufweist, wobei der Betätigungshebel an einem Ende um eine ortsfeste Drehachse schwenkbar gelagert ist und an seinem anderen Ende mit der Betätigungseinrichtung wirkverbunden ist und der Betätigungshebel einen entsprechenden Gegenkontaktbereich aufweist.

Der Kontaktbereich des Auslösehebels und/oder der Gegenkontaktbereich des Betätigungshebels kann beispielsweise eine frei drehbare Rolle oder Kugel zum Abwälzen der gegenseitigen Kontaktbereiche oder umgekehrt aufweisen. Es ist auch möglich, dass die Kontaktbereiche direkt aneinander liegen, ohne dass eine Kugel oder eine Rolle zum Abwälzen vorhanden ist.

Eine besonders vorteilhafte Ausgestaltung, die eine kompakte, platzsparende Lösung ermöglicht, zeichnet sich dadurch aus, dass der Auslösehebel eine gekröpfte oder gewinkelte Umfangskontur aufweist.

Um mit ein und demselben Gehäuse mehrere Unter- beziehungsweise Übersetzungsverhältnisse des Hebelmechanismus in einfacher Art und Weise je nach gewünschten Einsatz umsetzen zu können, zeichnet sich eine besonders vorteilhafte Ausgestaltung dadurch aus, dass das Gehäuse in seinen Wandungen mehrere Drehlagerausnehmungen für die Drehachsen und/oder die Hebel der Hebelanordnung mehrere Ausnehmungen aufweisen, derart, dass in einfacher Art und Weise Hebelanordnungen mit unterschiedlicher Unter- oder Übersetzung innerhalb des Gehäuses positioniert werden können, indem entsprechende Stifte oder Bolzen in die Ausnehmungen als Drehachsen eingesetzt werden.

Bevorzugt ist die Wandung des Gehäuses im Bereich der Gasfederanschlusseinheit außenseitig ein- oder zweiseitig mit einer Querschnittsverstärkung versehen, so dass einerseits ein dauerhaft zuverlässiger tragender Anschluss gewährleistet werden kann und im Übrigen die Wandung des Gehäuses relativ dünn gehalten werden kann, so dass es insgesamt zu einer Gewichts- und Raumreduzierung kommt und die Vorrichtung auch bei beengten Platzverhältnissen problemlos eingesetzt werden kann.

Die beschriebenen Hebelmechanismen stellen bevorzugte Ausgestaltungen dar, die dazu dienen, dass mittels geringer Auslösekräfte die Gasfeder kontrolliert und definiert ausgelöst werden kann, wobei gleichzeitig eine kompakte Konstruktion umgesetzt werden kann. Alternativ kann der Hebelmechanismus auch Exzenterkurvenscheiben oder Nocken oder ein Zahnrad oder gar ein Getriebe umfassen. Die Betätigungseinrichtung selbst, die in besonders einfacher Art und Weise als Bowdenzug ausgebildet ist, kann jedoch auch in anderer Art und Weise ausgestaltet sein. So können beispielsweise elektrische Stell- oder Schrittmotoren eingesetzt werden oder die Betätigung durch induktive oder magnetische Kräfte gesteuert werden. Auch ein hydraulischer oder pneumatischer Betrieb der Betätigungsorgane ist problemlos möglich.

Die besonders einfache Ausgestaltung der Betätigungseinrichtung als Seil- beziehungsweise Bowdenzug sorgt für ein einfache Montage und ist auch bei komplizierten Platzverhältnissen des Einsatzbereiches der Vorrichtung problemlos möglich. Dabei kann der Bowdenzug mit im Gehäuse angeordneten Betätigungshebel angelenkt sein, der bei Zug den Betätigungshebel in Richtung Auslöser schwenkt, wobei der Endbereich des Seiles alternativ in zwei Richtungen, nämlich parallel oder quer zur Gasfeder je nach benötigter Ausführungsform geführt werden kann und an der ersten beziehungsweise zweiten Anschlusseinheit sicher am Gehäuse angeschlossen werden kann. Die Betätigungseinrichtung selbst kann zur einfachen Auslösung einen Hebel, Knopf oder dergleichen aufweisen. Dies ermöglicht einfache, wirtschaftlich herstellbare Konstruktionen, die eine dauerhaft zuverlässige Funktion gewährleisten.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig.1: schematischer Längsschnitt durch ein erstes Ausführungsbeispiel einer Vorrichtung zum Auslösen einer Gasfeder mit einem ersten Hebelmechanismus, wobei die Betätigungseinrichtung für den Hebelmechanismus über eine Stecktülle an das Gehäuse der Vorrichtung angeschlossen ist und die Gasfeder direkt am Gehäuse angeschlossen ist, mit einem oberseitigen Anschluss, wobei Gasfeder und Betätigungseinrichtung im Wesentlichen in Parallelrichtung angeschlossen sind,
- Fig.2: schematischer Längsschnitt durch ein erstes Ausführungsbeispiel einer Vorrichtung zum Auslösen einer Gasfeder mit einem ersten Hebelmechanismus, wobei die Betätigungseinrichtung für den Hebelmechanismus über eine Stellschraube an das Gehäuse der Vorrichtung angeschlossen ist und die Gasfeder direkt am Gehäuse angeschlossen ist, mit einem oberseitigen Anschluss, wobei Gasfeder und Betätigungseinrichtung im Wesentlichen in Parallelrichtung angeschlossen sind,
- Fig.3: schematischer Längsschnitt durch ein erstes Ausführungsbeispiel einer Vorrichtung zum Auslösen einer Gasfeder mit einem ersten Hebelmechanismus, wobei die Betätigungseinrichtung für den Hebelmechanismus über eine Stellschraube an das Gehäuse der Vorrichtung angeschlossen ist und die Gasfeder direkt am Gehäuse angeschlossen ist, ohne oberseitigen Anschluss und mit einer oberseitigen Montageausnehmung, wobei Gasfeder und Betätigungseinrichtung im Wesentlichen in Parallelrichtung angeschlossen sind,
- Fig.4: schematischer Querschnitt durch die Vorrichtung gemäß Fig. 2 entlang in Längsrichtung der angeschlossenen Gasfeder, die eingeschraubt und mit einer Kontermutter gesichert ist,
- Fig. 5: schematischer Querschnitt durch die Vorrichtung gemäß Fig. 1 entlang in Längsrichtung der angeschlossenen Gasfeder, die eingeschraubt und mit zwei gegenüberliegenden Klemmschrauben geschraubt ist,
- Fig. 6: schematischer Querschnitt durch die Vorrichtung gemäß Fig. 1 entlang in Längsrichtung der angeschlossenen Gasfeder, die nicht eingeschraubt und mit zwei gegenüberliegenden Klemmschrauben gesichert ist, deren Spitze in eine an der Gasfeder vorhandenen Nut eingreifen,
- Fig. 7: schematischer Längsschnitt durch ein zweites Ausführungsbeispiel einer Vorrichtung zum Auslösen einer Gasfeder mit einem zweiten Hebelmechanismus, wobei die Betätigungseinrichtung für den Hebelmechanismus über eine Stellschraube an das Gehäuse der Vorrichtung angeschlossen ist und die Gasfeder direkt am Gehäuse angeschlossen ist, mit einem oberseitigen Anschluss, wobei Gasfeder und Betätigungseinrichtung im Wesentlichen in Querrichtung zueinander angeschlossen sind,
- Fig.8: schematischer Längsschnitt durch ein zweites Ausführungsbeispiel einer Vorrichtung zum Auslösen einer Gasfeder mit einem zweiten Hebelmechanismus, wobei die Betätigungseinrichtung für den Hebelmechanismus über eine Stecktülle an das Gehäuse der Vorrichtung angeschlossen ist und die Gasfeder direkt am Gehäuse angeschlossen ist, mit einem oberseitigen Anschluss, wobei Gasfeder und Betätigungseinrichtung im Wesentlichen in Querrichtung zueinander angeschlossen sind,
- Fig.9: schematischer Querschnitt durch die Vorrichtung gemäß Fig. 7 entlang in Längsrichtung der angeschlossenen Gasfeder, die eingeschraubt und mit einer Kontermutter gesichert ist,
- Fig. 10: schematischer Querschnitt durch die Vorrichtung gemäß Fig. 8 entlang in Längsrichtung der angeschlossenen Gasfeder, die eingeschraubt und mit zwei gegenüberliegenden Klemmschrauben geschraubt ist,
- Fig.11: schematischer Querschnitt durch die Vorrichtung gemäß Fig. 1 entlang in Längsrichtung der angeschlossenen Gasfeder, die nicht eingeschraubt und mit zwei gegenüberliegenden Klemmschrauben gesichert ist, deren Spitze in eine an der Gasfeder vorhandenen Nut eingreifen,
- Fig. 12: schematische Seitenansicht der Vorrichtung gemäß den Figuren 1, 2, 7 und 8
- Fig.13: schematische Untersicht des Gehäuses gemäß Fig. 12,
- Fig.14: schematische Draufsicht auf das Gehäuse gemäß Fig. 12,
- Fig. 15: schematische Seitenansicht von links des Gehäuses von Fig. 12,
- Fig. 16: schematische Seitenansicht von rechts des Gehäuses von Fig. 12,
- Fig.17: schematischer Längsschnitt durch das Gehäuse gemäß Fig. 17,
- Fig.18: schematische Seitenansicht des Gehäuses der Vorrichtung gemäß Fig. 3 ohne oberen Bowdenanschluss,
- Fig.19a: schematische Seitenansicht eines Widerlagerelements, das in Nuten des Gehäuses gemäß Fig. 17 einführbar ist,
- Fig.19b: schematische Stirnansicht des Widerlagerelements gemäß Fig. 19a und
- Fig. 20: stark schematisierte Darstellung einer Vorrichtung zum Auslösen einer Gasfeder mit alternativ in zwei unterschiedlichen Richtungen anschließbaren Betätigungseinrichtungen und einem direkten Gasfederanschluss an das Gehäuse.

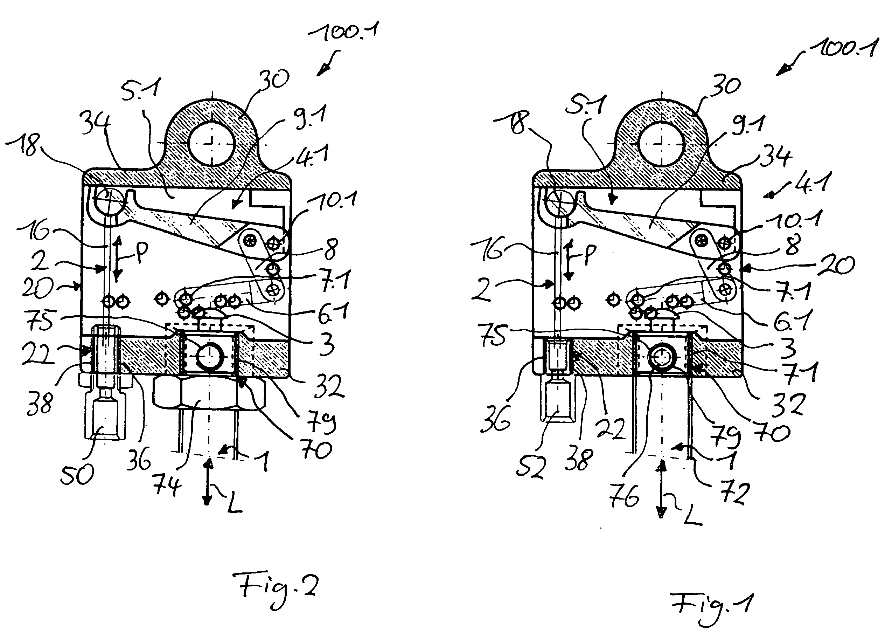

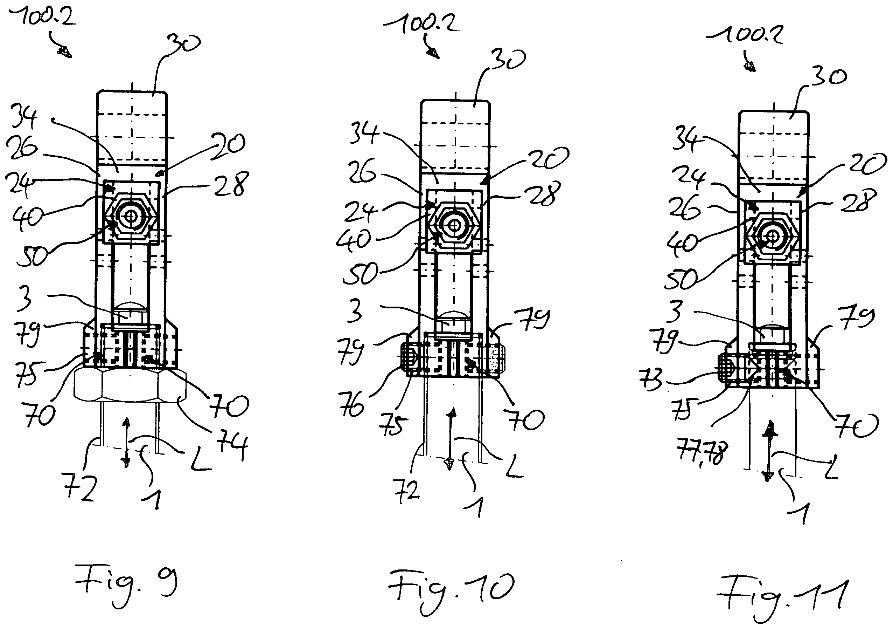

Die Ausführungsformen aus Abbildungen 2, 3, 4, 6, 7, 9, 11, 18 sind nicht erfindungsgemäß.

### WEGE ZUM AUSFÜHREN DER ERFINDUNG

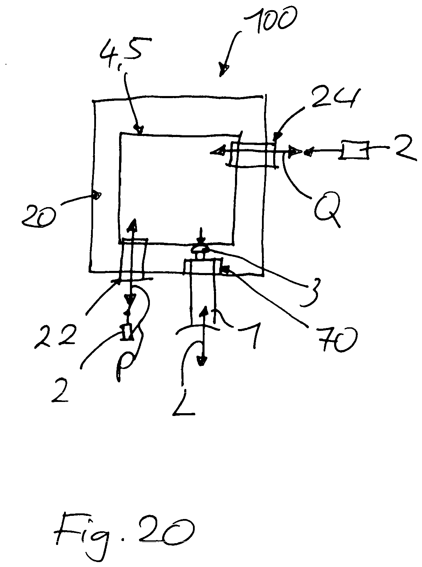

In Fig. 20 ist in stark schematisierter Darstellung eine Vorrichtung 100 zum Auslösen einer in Fig. 20 nur teilweise oberseitig endseitig, an die Vorrichtung 100 angeschlossene, dargestellten Gasfeder 1 dargestellt. Als erfindungswesentliches Merkmal ist dargestellt, dass die Gasfeder 1 beziehungsweise deren oberer Endbereich mit dem Auslöser 3 direkt am Gehäuse 20 der Vorrichtung 100 angeschlossen werden kann und über durch die Gehäusewandung verlaufende Klemm- und/oder Formschlussmittel fixiert werden kann, was eine Reduzierung des benötigten Raumvolumens ermöglicht, da auf eine Kontermutter verzichtet werden kann, und gleichzeitig eine hohe Funktionalität gewährleistet.

Ein weiterer Gedanke ist der, dass über eine erste Gehäuseanschlusseinheit 22 eine Betätigungseinrichtung 2 in einer Richtung P angeschlossen werden kann, die im Wesentlichen parallel zur Längsrichtung L der Gasfeder 1 verläuft oder alternativ ein Anschluss der Betätigungseinrichtung 2 über eine zweite Gehäuseanschlusseinheit 24 möglich ist, die im Wesentlichen quer Q zur Längsrichtung L der Gasfeder 1 verläuft. Die Betätigungseinrichtung 2 wirkt dabei auf ein Betätigungsorgan 4 mit einem Hebelmechanismus 5 ein, wobei der Hebelmechanismus auf den Auslöser 3 der Gasfeder 1 einwirkt.

Nachfolgend sind verschiedene Ausführungsformen in konstruktiver Ausgestaltung beschrieben.

Die Figuren 1 bis 11 zeigen erste Ausführungsformen einer Vorrichtung 100.1,100.2, 100.3 zum Auslösen einer hier nur endseitig ausschnittsweise dargestellten Gasfeder 1, wobei die Vorrichtungen 100.1, 100.2, 100.3 eine lediglich, angedeutete Betätigungseinrichtung 2 aufweisen, wobei die Betätigungseinrichtung 2 im Ausführungsbeispiel als Bowdenzug mit einem Seil 16 ausgebildet ist. Die Betätigungseinrichtung 2 wirkt auf ein unmittelbar auf einen endseitigen Auslöser 3 der Gasfeder 1 einwirkendes Betätigungsorgan 4.1 beziehungsweise 4.2 ein.

In Fig. 1 ist das Betätigungsorgan 4.1 als Kraft- und/oder wegmäßig unter- oder übersetzender Hebelmechanismus 5.1 ausgeführt, wobei einer der Hebel der sogenannte Auslösehebel 6.1 unmittelbar auf den Auslöser 3 drückt.

Auslöserhebel 6.1 ist an einem Ende um eine ortsfeste Drehachse 7.1 schwenkbar an einem Gehäuse 20 anlenkt und an seinem anderen Ende mit einem zweiten Hebel, den sogenannten Verbindungshebel 8, an dessen Ende schwenkbar verbunden. Der verbindungshebel 8 ist an seinem anderen Ende schwenkbar mit einem dritten Hebel, dem sogenannten Betätigungshebel 9.1 verbunden. Der Betätigungshebel 9.1 ist an einem Ende um eine ortsfeste Drehachse 10.1 schwenkbar an dem Gehäuse 20 angelenkt und an dem anderen Ende mit der Betätigungseinrichtung 2 über einen Pressnippel 18 wirkverbunden.

Das Verhältnis der Hebelabschnitte einerseits des Auslösehebels 6.1 zwischen ortsfester Drehachse 7.1 und Auslöser 3 sowie zwischen Auslöser 3 und der Schwenkverbindung mit dem Verbindungshebel 8 und andererseits des Betätigungshebels 9.1 zwischen ortsfester Drehachse 10.1 sowie zwischen Schwenkverbindung mit dem Verbindungshebel 8 und dem freien Ende beziehungsweise der Wirkverbindung mit der Betätigungseinrichtung 2 gibt das Maß der Unter- oder Übersetzung des Hebelmechanismus 5.1 vor.

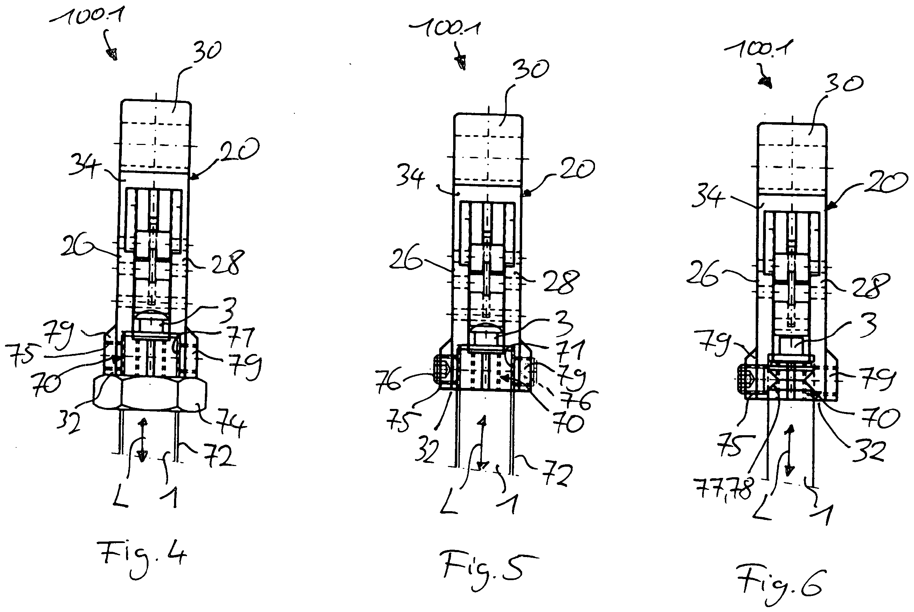

Der gesamte Hebelmechanismus ist von dem Gehäuse 20 umgeben, das aus zwei gegenüberliegenden parallelen Wandungen 26, 28, einer unteren Stirnwandung 32 und einer oberen Stirnwandung 34 besteht (siehe insbesondere Fig. 4, 5 und 6). Oberseitig ist an die obere Stirnwandung 34 eine als Bowdenanschluss ausgebildete Anschlusseinheit 30 angeformt, die zum Anschluss der Vorrichtung 100.1 an umgebende Bauteile dient.

Die Vorrichtung weist in der unteren Stirnwandung 32 im in Fig. 1 linken Randbereich eine erste Gehäuseanschlusseinheit 22 auf, die als durchgehende Ausnehmung 36 mit Innengewinde 38 ausgebildet ist.

Im Anschluss an die durchgehende Ausnehmung 36 ist ein in Fig. 1 nach links offener durchgehender Schlitz 54 an der unteren Stirnwandung 32 vorhanden. Die erste Gehäuseanschlusseinheit 22 dient dazu, die ankommende Betätigungseinrichtung 2 an das Gehäuse 20 anzuschließen. Konstruktiv ist dies bei dem Ausführungsbeispiel gemäß Fig. 1 durch eine Stecktülleneinheit 52 umgesetzt. Die Stecktülleneinheit 52 ist in der Ausnehmung 36 der ersten Gehäuseanschlusseinheit 22 angeordnet und das Seil 16 der Betätigungseinrichtung 2 in das Innere hindurch geführt bis zum Anschluss des Pressnippel 18 an den einen Endbereich des Betätigungshebels 9. Der Schlitz 36 dient dazu, dass die Betätigungseinrichtung 2 insbesondere das Seil 16 bei der Montage seitlich in einfacher Art und Weise eingeführt werden kann.

Die in Fig. 2 dargestellte Vorrichtung 100.1 unterscheidet sich von der Vorrichtung 100.1 gemäß Fig. 1 dadurch, dass anstelle der Stecktülleneinheit 52 in der ersten Gehäuseanschlusseinheit 22 eine Stellschraubeneinheit 50 eingeschraubt ist. Mit dieser Stellschraubeneinheit 50 lässt sich die wirksame Länge des Seils 16 der Betätigungseinrichtung 2 einjustieren. Gleiche Bauteile tragen das gleiche Bezugszeichen und werden nicht nochmals erläutert.

Die Vorrichtung 100.1 der Fig. 1 und der Fig. 2 zeichnen sich auch dadurch aus, dass der obere Endbereich der Gasfeder 1, indem der Auslöser 3 längsverschieblich geführt ist direkt an dem Gehäuse 20 angeschlossen ist. Hierzu weist die Vorrichtung 100.1 in der unteren Stirnwandung 32 eine Gasfederanschlusseinheit 70, die als durchgehende Ausnehmung mit Innengewinde 72 ausgebildet ist. Der Endbereich der Gasfeder 1 besitzt ein Außengewinde 72, das in das Innengewinde 71 der Gasfederanschlusseinheit 70 eingeschraubt wird.

Die Längsrichtung der Gasfeder ist in Fig. 1 und 2 mit L bezeichnet. Bei der Ausführung der Vorrichtung 100.1 gemäß Fig. 1 ist der eingeschraubte Endbereich der Gasfeder 1 durch eine quer zur Längsrichtung, das heißt senkrecht zur Blattebene von Fig. 1 in eine zweite Ausnehmung eingeschraubten Gewindestift von beiden Außenseiten her gesichert.

Im Bereich der Gasfederanschlusseinheit 70 weisen die Wandung 26, 28 des Gehäuses 20 eine Querschnittsverstärkung 79 auf. Der Gewindestift ist jeweils in eine in der Wandung 26 beziehungsweise 28 durchgehenden Queranschlussausnehmung 75 eingeschraubt. Dadurch ist die Gasfeder 1 sicher am Gehäuse 20 angeschlossen.

Die Anschlussrichtung der Betätigungseinrichtung 2 bei den Ausführungsbeispielen gemäß den Figuren 1 und 2 ist in den Figuren mit dem Doppelpfeil P angegeben und verläuft parallel zur Längsrichtung L der Gasfeder 1.

Die Ausführungsform der Vorrichtung 100.1 gemäß Fig. 2 unterscheidet sich von der Ausführungsform gemäß Fig. 1 dadurch, dass bei der Ausführungsform gemäß Fig. 2 auf die seitlich eingeschraubten Gewindestifte verzichtet wird und die Lagesicherung der Gasfeder 1 an dem Gehäuse durch eine auf das Außengewinde 72 aufgeschraubte Kontermutter 74 bewirkt wird.

Der Anschluss der Gasfeder 1 bei der Ausführungsform gemäß Fig. 1 ist im Querschnitt in der Fig. 5 näher dargestellt. Der Anschluss der Gasfeder gemäß der Ausführungsform in Fig. 2 ist in Fig. 4 im Querschnitt näher dargestellt.

Schließlich ist noch eine dritte Ausführungsvariante des Anschlusses der Gasfeder 1 an das Gehäuse möglich, die in Fig. 6 im Querschnitt dargestellt ist. Sie ähnelt der Ausführungsform gemäß Fig. 5, jedoch ist hier kein Innengewinde der Queranschlussausnehmung 75 erforderlich, da der Endbereich der Gasfeder 1 eine pfauförmige Nut aufweist, in die die in die Querausnehmung 75 eingeschraubten Gewindestifte 73 mit Ihrer Spitze im eingeschraubten Zustand formschlüssig eingreifen, so dass die zuverlässige Verbindung der Gasfeder 1 mit dem Gehäuse 20 gewährleistet ist.

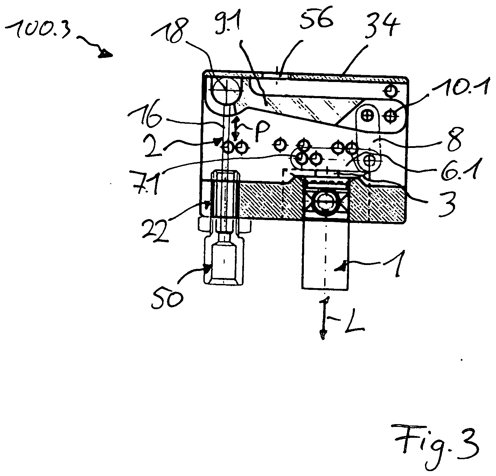

Die in Fig. 3 dargestellte Vorrichtung 100.3 zum Auslösen einer Gasfeder 1 ähneln vom Betätigungsorgan 4.1 mit Hebelmechanismus 5.1 den oben dargestellten Vorrichtungen 100, ist jedoch kompakter ausgebildet und ohne eine obere Anschlusseinheit 30. In der oberen Stirnwandung 34 ist eine Montageöffnung 36 eingeformt, durch die hindurch Zugriff auf den Hebelmechanismus 5.1 beziehungsweise Betätigungshebel 9.1 zum Erleichtern der Montage möglich ist. Der Anschluss der Betätigungseinrichtung 2 am Gehäuse 20 erfolgt wie bei der Ausführungsform gemäß Fig. 2 über die erste Gehäuseanschlusseinheit 22 mit eingeschraubter Stellschraubeneinheit 50. Gleiche Bauteile tragen dasselbe Bezugszeichen und werden nicht nochmals erläutert. Der Anschluss des oberen Endbereiches der Gasfeder 1 an das Gehäuse 20 erfolgt entsprechend der Darstellung in Fig. 6 mit Gewindestiften 76, deren Spitze 78 in eine Nut 77 des oberen Endbereiches der Gasfeder 1 eingreifen.

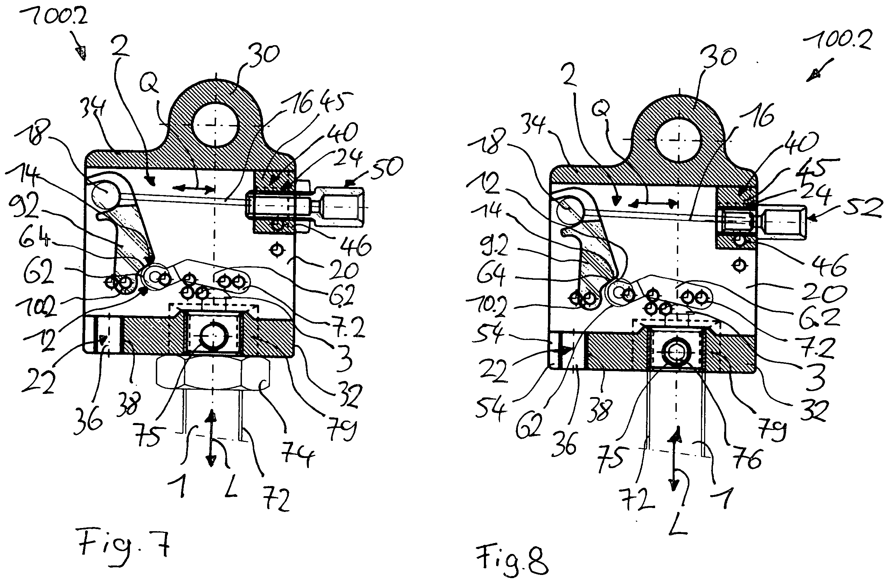

In den Figuren 7 und 8 ist jeweils eine alternative Vorrichtung 100.2 zum Auslösen einer Gasfeder 1 dargestellt, die vom Gehäuse 20 her grundsätzlich denselben Aufbau aufweist, wie die oben beschriebene Vorrichtung 100.1, wobei jedoch hier die Betätigungseinrichtung 2 im rechten oberen Randbereich des Gehäuses über eine zweite Gehäuseanschlusseinheit 24 angeschlossen ist, so dass das Seil 16 der als Bowdenzug angeschlossenen Betätigungseinrichtung 2 im Wesentlichen quer Q zur Längsrichtung L der Gasfeder 1 verläuft.

Das im Inneren des Gehäuses 20 vollständig untergebrachte Betätigungsorgan 4.2 mit seinem Hebelmechanismus 5.2 unterscheidet sich von dem Hebelmechanismus 5.1 dadurch, dass ein um eine Drehachse 7.2 ortsfest drehbar vorhandener Auslösehebel 6.2 vorhanden ist, der auf den Auslöser 3 einwirkt und an dessen anderen Endbereich eine drehbare Rolle 62, die eine Kontaktfläche 12 bildet, aufweist, die an einer entsprechenden Kontaktfläche 64 (Gegenkontaktfläche 14) eines Betätigungshebels 9.2 anliegt, wobei der Betätigungshebel 9.2 an seinem einen Ende um eine ortsfeste Drehachse 10.2 drehbar gelagert ist und an dessen anderen Ende vor dem Pressnippel 18 das Seil 16 der Betätigungseinrichtung 2 verankert ist. Bei Betätigung des Betätigungshebels 9.2 wirkt dessen Kontaktfläche 64 auf die Rolle 62 des Auslösehebels 6.2 ein, wobei diese an der Kontaktfläche 64 abrollt und den entsprechenden den Auslösedruck auf den Auslöser 3 der Gasfeder 1 ausübt. Der Auslösehebel 6.2 ist dabei gekröpft ausgebildet, so dass sich ein kompakter Aufbau erzielen lässt.

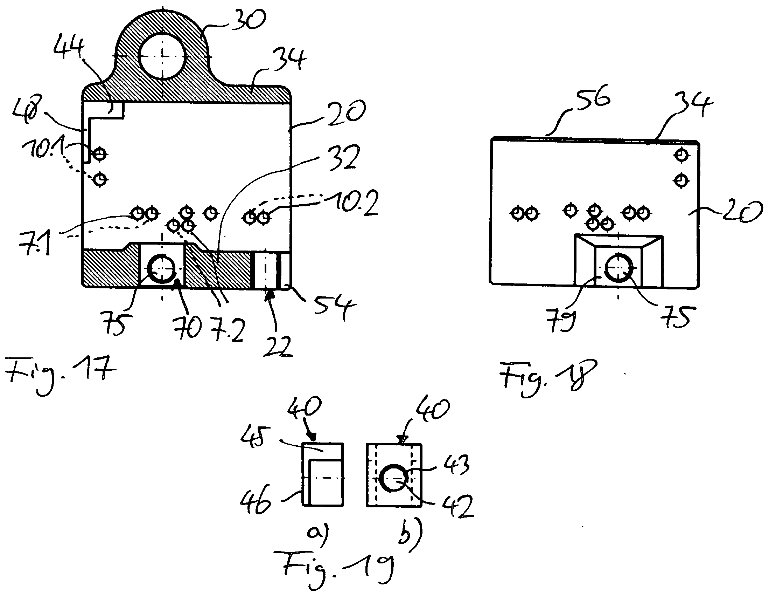

Die zweite Gehäuseanschlusseinheit 24 weist ein Widerlagerelement 40 auf, das im rechten oberen Randbereich des Gehäuses 20 an den gegenüberliegenden Wandungen 26, 28 formschlüssig lösbar gelagert ist. Das Widerlagerelement 40 besitzt eine durchgehende Ausnehmung 42 mit Innengewinde 43 und ist in den Figuren 19a und b näher dargestellt.

In die Ausnehmung 42 ist bei der Ausführungsform gemäß Fig. 8 eine Stecktülleneinheit 52 und in der Ausführungsform gemäß Fig. 7 eine Stellschraubeneinheit 50 eingesteckt beziehungsweise eingeschraubt zum führenden Anschluss der Betätigungseinrichtung.

Im Ausführungsbeispiel besitzt das Widerlagerelement 40 oberseitig zu beiden Seiten eine Vorsprungeinheit 45, die in eine entsprechende an der Innenwandung der Wandungen 26, 28 nach innen offene Nut 44 des Gehäuses 20 eingeführt wird. Nach außen besitzt das Widerlagerelement 40 eine Widerlagerplatte 46, die die durchgehende Ausnehmung 42 aufweist und die über entsprechende Ausnehmungen 48 an der Innenseite der Wandungen 26, 28 angelegt werden kann, so dass bei eingesetzten Widerlagerelement 40 die Vorsprungeinheit 45 in der Nut 44 und die Widerlagerplatte 46 in den Ausnehmungen 48 gelagert ist und somit außenseitig bündig mit dem Gehäuse 20 abschließt.

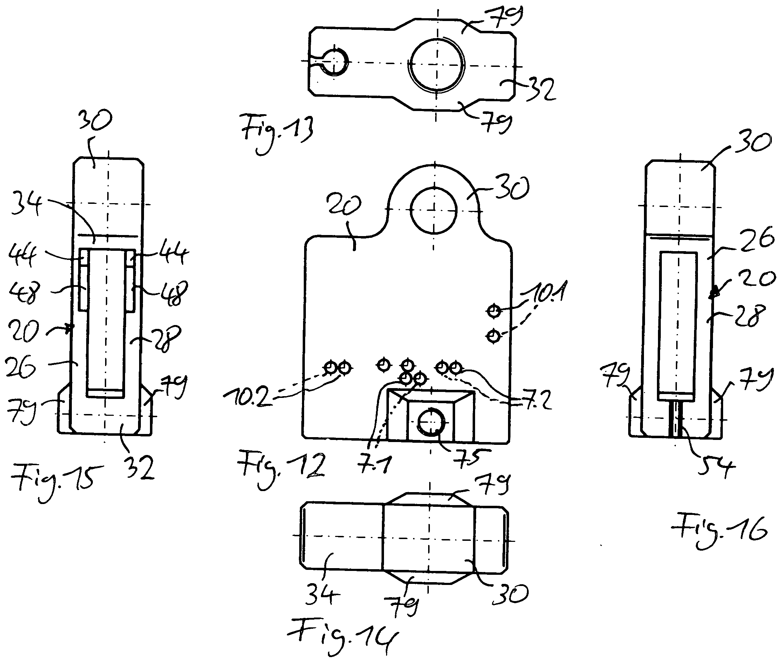

Das Gehäuse selbst ist in den Figuren 12 bis 18 näher dargestellt.

In den Figuren 12 und 17 sind am Gehäuse 20 die unterschiedlichen geometrischen Anordnungen der festen Drehachsen 7.1, 7.2, 10.1, 10.2 dargestellt, wobei die alternative Anordnung der Drehachsen mit einer gestrichelten Linie angedeutet ist. Je nachdem an welchen Drehachsen 7,10 die Hebelelemente des Hebelmechanismus 5 angeschlossen sind, lassen sich unterschiedliche Unter- und Übersetzungsverhältnisse des Hebelmechanismus umsetzen.

## Patentansprüche

1. Vorrichtung (100.1, 100.2) zum Auslösen einer Gasfeder (1) mit
- einer Betätigungseinrichtung (2),
- einem mit der Betätigungseinrichtung (2) wirkverbundenen auf einen endseitigen Auslöser (3) der Gasfeder (1) einwirkendem Betätigungsorgan (4.1, 4.2),
- wobei das Betätigungsorgan (4.1, 4.2) auf den Auslöser (3) mittelbar oder unmittelbar einwirkt und insbesondere als kraft- und/oder wegmäßig unter- oder übersetzende Hebelanordnung (5.1, 5.2) mit einem Betätigungshebel (9.1, 9.2) ausgebildet ist, die mit der Betätigungseinrichtung (2) in Wirkverbindung steht, und zumindest mit einem unmittelbar oder mittelbar mit dem Betätigungshebel (9.1, 9.2) zusammenwirkenden Auslösehebel (6.1, 6.2), der auf den Auslöser (3) einwirkt, und
- einem Gehäuse (20), wobei
- das Gehäuse (20), insbesondere in seiner unteren Stirnwandung (32), eine Gasfederanschlusseinheit (70) aufweist, über die der obere Endbereich der Gasfeder (1) mit bis ins Innere des Gehäuses (20) durchgeführtem Auslöser (3) anschließbar ist und
- die Gasfederanschlusseinheit (70) als durchgehende Ausnehmung ausgebildet ist,
- **dadurch gekennzeichnet, dass**
- im Bereich der Ausnehmung Mittel zum klemmenden Fixieren des in die Ausnehmung eingebrachten oberen Endbereichs der Gasfeder (1) vorhanden sind,
- der Auslöser (3) ist in dem oberen Endbereich der Gasfeder (1) längsverschieblich geführt,
- der obere Endbereich der Gasfeder (1) ist direkt an dem Gehäuse (20) angeschlossen,
- die durchgehende Ausnehmung der Gasfederanschlusseinheit (70) ein Innengewinde (71) aufweist, in das der obere Endbereich der Gasfeder über ein Außengewinde (72) eingeschraubt ist,
- im Bereich der Gasfederanschlusseinheit (70) quer zur Längsrichtung (L) der Gasfeder (1) im Gehäuse (20) zumindest eine Queranschlussausnehmung (75) vorhanden ist, in die ein Gewindestift (76) zur Sicherung des Anschlusses des in die Gasfederanschlusseinheit (70) eingeschraubten Teils der Gasfeder (1) eingeschraubt ist.

2. Vorrichtung nach Anspruch 1,
- **dadurch gekennzeichnet, dass**
- die Wandung (26, 28) des Gehäuses (20) im Bereich der Gasfederanschlusseinheit (70) außenseitig ein- oder zweiseitig eine Querschnittsverstärkung (79) aufweist.

3. Vorrichtung nach Anspruch 1 oder 2,
- **dadurch gekennzeichnet, dass**
- an dem Gehäuse (20) eine erste Gehäuseanschlusseinheit (22) zum Anschluss einer Anschlusseinheit (30) der Betätigungseinrichtung (2) vorhanden ist, wobei die anschließbare beziehungsweise angeschlossene Betätigungseinrichtung (2) im Wesentlichen parallel (P) zur Längsrichtung der Gasfeder (1) innerhalb des Gehäuses (20) geführt ist und
- an dem Gehäuse (20) eine zweite Gehäuseanschlusseinheit (24) zum Anschließen einer Anschlusseinheit (30) der Betätigungseinrichtung (2), wobei die anschließbare beziehungsweise angeschlossene Betätigungseinrichtung (2) im Wesentlichen quer (Q) zu der Längsrichtung der Gasfeder (1) innerhalb des Gehäuses (20) geführt ist.

4. Vorrichtung nach Anspruch 3,
- **dadurch gekennzeichnet, dass**
- das Gehäuse (20) zwei gegenüberliegende Wandungen (26, 28), eine untere Stirnwandung (32) und insbesondere eine obere Stirnwandung (34) aufweist und die erste Gehäuseanschlusseinheit (22) für die Betätigungseinrichtung (2) an der unteren Stirnwandung (32) vorhanden ist und insbesondere durch eine die untere Stirnwandung (34) durchdringende Ausnehmung (36) gebildet wird, die insbesondere ein Innengewinde (38) aufweist, und die zweite Gehäuseanschlusseinheit (24) im linken oder rechten Randbereich der gegenüberliegenden Wandungen (26, 28) angeordnet ist.

5. Vorrichtung nach einem oder mehreren der vorstehenden Ansprüche,
- wobei das Betätigungsorgan (4.1) mit seinem Hebelmechanismus (5.1) sich dadurch auszeichnet, dass der Auslösehebel (6.1) an einem Ende um eine ortsfeste Drehachse (7.1) schwenkbar an dem Gehäuse (20) angelenkt und an seinem anderen Ende mit einem zweiten Hebel
- Verbindungshebel (8) - an dessen Ende schwenkbar verbunden ist, dass der Verbindungshebel (8) an seinem anderen Ende schwenkbar mit einem dritten Hebel - Betätigungshebel (9.1) - verbunden ist und das der Betätigungshebel (9.1) an einem Ende um eine ortsfeste Drehachse (10.1) schwenkbar am Gehäuse (20) angelenkt und an seinem anderen Ende mit der Betätigungseinrichtung (2) wirkverbindbar beziehungsweise wirkverbunden ist.

6. Vorrichtung nach einem oder mehreren der Ansprüche 1 bis 4,
- wobei das Betätigungsorgan (4.2) mit seinem Hebelmechanismus (5.2) sich dadurch auszeichnet, dass der Auslösehebel (6.2) an einem Ende um eine ortsfeste Drehachse (7.1) schwenkbar gelagert ist, wobei dieser Auslösehebel (6.2) an seinem anderen Ende einen Kontaktbereich (12) zum Zusammenwirken mit einem zweiten Hebel - Betätigungshebel (9.2) - aufweist, wobei der Betätigungshebel (9.2) an einem Ende um eine ortsfeste Drehachse (10.2) schwenkbar gelagert ist und an seinem anderen Ende mit der Betätigungseinrichtung (2) wirkverbunden ist und der Betätigungshebel (9.2) einen entsprechenden Gegenkontaktbereich (14) aufweist.

7. Vorrichtung nach einem oder mehreren der vorstehenden Ansprüche,
- **dadurch gekennzeichnet, dass**
- der Hebelmechanismus (5.1, 5.2) vollständig innerhalb des Gehäuses (20) angeordnet ist.

8. Vorrichtung nach einem oder mehreren der vorstehenden Ansprüche,
- **dadurch gekennzeichnet, dass**
- das Gehäuse (20) in seinen Wandungen (26, 28) mehrere Drehlagerausnehmungen für die Drehachsen (10.1, 10.2, 7.1, 7.2) und/oder die Hebel der Hebelanordnung (5.1, 5.2) mehrere Ausnehmungen aufweisen, derart, dass in einfacher Art und Weise Hebelanordnungen mit unterschiedlicher Unter- oder Übersetzung innerhalb des Gehäuses (20) drehgelagert positioniert werden können.

## Claims

1. A device (100.1, 100.2) for triggering a gas spring (1) comprising
- an actuating device (2),
- an actuating element (4.1, 4.2), which is operatively connected to the actuating device (2) and acts on an end-side trigger (3) of the gas spring (1),
- the actuating element (4.1, 4.2) acting directly or indirectly on the trigger (3) and being formed in particular as a lever arrangement (5.1, 5.2), which reduces or increases the transmitted force and/or displacement, comprises an actuating lever (9.1, 9.2) and is in operative connection with the actuating device (2), and at least one trigger lever (6.1, 6.2), which interacts directly or indirectly with the actuating lever (9.1, 9.2) and acts on the trigger (3), and
- a housing (20),
- the housing (20) having, in particular in its lower end wall (32), a gas spring connecting unit (70), by way of which the upper end region of the gas spring (1) can be connected to the trigger (3) led through into the interior of the housing (20), and
- the gas spring connecting unit (70) being formed as a through-clearance,
- **characterized in that**
- in the region of the clearance there are means for the clamping fixing of the upper end region of the gas spring (1) in the housing (20) that is inserted into the clearance,
- the trigger (3) is relocatable guided in the upper end region of the gas spring (1),
- the upper end region of the gas spring (1) is connected directly to the housing (20),
- the through clearance of the gas spring connecting unit (70) comprises a internal thread (71), in which the upper end region of the gas spring is screwed with an external thread (72),
- in the region of the gas spring connecting unit (70) there is transversely to the longitudinal direction (L) of the gas spring (1) in the housing (20) at least one transverse connecting clearance (75), into which there is screwed a threaded pin (76) for securing the connection of the part of the gas spring (1) that is screwed into the gas spring connecting unit (70).

2. The device as claimed in claim 1,
- **characterized in that**
- the wall (26, 28) of the housing (20) has on one or two sides of the outside in the region of the gas spring connecting unit (70) a cross-sectional reinforcement (79).

3. The device as claimed in claim 1 or 2,
- **characterized in that**
- on the housing (20) there is a first housing connecting unit (22) for connecting a connecting unit (30) of the actuating device (2), the connectable or connected actuating device (2) being guided substantially parallel (P) to the longitudinal direction of the gas spring (1) within the housing (20), and
- on the housing (20) there is a second housing connecting unit (24) for connecting a connecting unit (30) of the actuating device (2), the connectable or connected actuating device (2) being guided substantially transversely (Q) to the longitudinal direction of the gas spring (1) within the housing (20).

4. The device as claimed in claim 3,
- **characterized in that**
- the housing (20) has two opposite walls (26, 28), a lower end wall (32) and in particular an upper end wall (34), and the first housing connecting unit (22) for the actuating device (2) is on the lower end wall (32) and is in particular formed by a clearance (36) that passes through the lower end wall (34) and in particular has an internal thread (38), and the second housing connecting unit (24) is arranged in the left-hand or right-hand peripheral region of the opposite walls (26, 28).

5. The device as claimed in one or more of the preceding claims,
- the actuating element (4.1) with its lever mechanism (5.1) being distinguished by the fact that the trigger lever (6.1) is at one end articulated on the housing (20) pivotably about a fixed pivot axis (7.1) and at its other end is pivotably connected to a second lever - the connecting lever (8) - at the end thereof, that the connecting lever (8) is pivotably connected at its other end to a third lever - the actuating lever (9.1) - and that the actuating lever (9.1) is at one end articulated on the housing (20) pivotably about a fixed pivot axis (10.1) and at its other end can be operatively connected or is operatively connected to the actuating device (2).

6. The device as claimed in one or more of the claims 1 to 4,
- the actuating element (4.2) with its lever mechanism (5.2) being distinguished by the fact that the trigger lever (6.2) is at one end mounted pivotably about a fixed pivot axis (7.1), this trigger lever (6.2) having at its other end a contact region (12) for interacting with a second lever - the actuating lever (9.2) -, the actuating lever (9.2) being mounted at one end pivotably about a fixed pivot axis (10.2) and operatively connected at its other end to the actuating device (2) and the actuating lever (9.2) having a corresponding counter contact region (14).

7. The device as claimed in one or more of the preceding claims,
- **characterized in that**
- the lever mechanism (5.1, 5.2) is arranged completely within the housing (20).

8. The device as claimed in one or more of the preceding claims,
- **characterized in that**
- the housing (20) has in its walls (26, 28) a number of pivot bearing clearances for the pivot axes (10.1, 10.2, 7.1, 7.2) and/or the levers of the lever arrangement (5.1, 5.2) have a number of clearances in such a way that lever arrangements with different reducing or increasing transmissions can be positioned in a rotationally mounted manner within the housing (20) in an easy way.

## Revendications

1. Dispositif (100.1, 100.2) de déclenchement d'un ressort à gaz (1), ledit dispositif comprenant
- un moyen d'actionnement (2),
- un élément d'actionnement (4.1, 4.2) relié fonctionnellement au moyen d'actionnement (2) et agissant sur un déclencheur côté extrémité (3) du ressort à gaz (1),
- l'élément d'actionnement (4.1, 4.2) agissant directement ou indirectement sur le déclencheur (3) et étant conçu notamment comme un ensemble à levier (5.1, 5.2) multiplicateur ou démultiplicateur en termes de force et/ou de trajet, qui comprend un levier d'actionnement (9.1, 9.2) et qui est relié fonctionnellement au moyen d'actionnement (2), et au moins un levier de déclenchement (6.1, 6.2) coopérant directement ou indirectement avec le levier d'actionnement (9.1, 9.2) et agissant sur le déclencheur (3), et
- un boîtier (20),
- le boîtier (20) comportant, notamment dans sa paroi frontale inférieure (32), une unité de raccordement de ressort à gaz (70) permettant de raccorder la région d'extrémité supérieure du ressort à gaz (1) à un déclencheur (3) guidé jusqu'à l'intérieur du boîtier (20), et
- l'unité de raccordement de ressort à gaz (70) étant conçue comme un évidement continu,
- **caractérisé en ce que**
- des moyens sont prévus, dans la région de l'évidement, pour fixer par serrage la région d'extrémité supérieure du ressort à gaz (1) qui est introduite dans l'évidement,
- le déclencheur (3) est guidé dans la région d'extrémité supérieure du ressort à gaz (1) de manière à pouvoir être déplacé longitudinalement,
- la région d'extrémité supérieure du ressort à gaz (1) est raccordée directement au boîtier (20),
- l'évidement continu de l'unité de raccordement de ressort à gaz (70) comporte un filetage intérieur (71) dans lequel la région d'extrémité supérieure du ressort à gaz est vissée par le biais d'un filetage extérieur (72),
- au moins un évidement de raccordement transversal (75), dans lequel une tige filetée (76) est vissée pour fixer le raccordement de la partie du ressort à gaz (1) vissée dans l'unité de raccordement de ressort à gaz (70), est ménagé dans le boîtier (20) dans la région de l'unité de raccordement de ressort à gaz (70) transversalement à la direction longitudinale (L) du ressort à gaz (1).

2. Dispositif selon la revendication 1,
- **caractérisé en ce que**
- la paroi (26, 28) du boîtier (20) comporte dans la région de l'unité de raccordement de ressort à gaz (70), sur un côté ou sur deux côtés à l'extérieur, un renfort en coupe transversale (79).

3. Dispositif selon la revendication 1 ou 2,
- **caractérisé en ce que**
- une première unité de raccordement de boîtier (22) destinée à raccorder une unité de raccordement (30) du moyen d'actionnement (2) est prévue sur le boîtier (20), le moyen d'actionnement (2), raccordé ou pouvant être raccordé, étant guidé sensiblement parallèlement (P) à la direction longitudinale du ressort à gaz (1) à l'intérieur du boîtier (20) et
- une deuxième unité de raccordement de boîtier (24) destinée à raccorder une unité de raccordement (30) du moyen d'actionnement (2) est prévue sur le boîtier (20), le moyen d'actionnement (2) raccordé ou pouvant être raccordé étant guidé sensiblement transversalement (Q) à la direction longitudinale du ressort à gaz (1) à l'intérieur du boîtier (20).

4. Dispositif selon la revendication 3,
- **caractérisé en ce que**
- le boîtier (20) comporte deux parois opposées (26, 28), une paroi frontale inférieure (32) et notamment une paroi frontale supérieure (34), et la première unité de raccordement de boîtier (22) destinée au moyen d'actionnement (2) est prévue sur la paroi frontale inférieure (32) et est en particulier formée par un évidement (36) qui pénètre dans la paroi frontale inférieure (34) et qui comporte notamment un filetage intérieur (38), et la deuxième unité de raccordement de boîtier (24) est disposée dans la région de bord gauche ou droite des parois opposées (26, 28).

5. Dispositif selon une ou plusieurs des revendications précédentes,
- l'élément d'actionnement (4.1) pourvu de son mécanisme à levier (5.1) étant **caractérisé en ce que** le levier de déclenchement (6.1) est articulé à une extrémité sur le boîtier (20) de manière pivotante sur un axe de rotation fixe (7.1) et est relié à son autre extrémité à un deuxième levier, levier de liaison (8), de manière pivotante à l'extrémité de celui-ci, **en ce que** le levier de liaison (8) est relié à son autre extrémité de manière pivotante à un troisième levier, levier d'actionnement (9.1), et **en ce que** le levier d'actionnement (9.1) est articulé à une extrémité sur le boîtier (20) de manière pivotante sur un axe de rotation fixe (10.1) et est relié fonctionnellement ou peut être relié fonctionnellement à son autre extrémité au moyen d'actionnement (2).

6. Dispositif selon une ou plusieurs des revendications 1 à 4,
- l'élément d'actionnement (4.2) pourvu de son mécanisme à levier (5.2) étant **caractérisé en ce que** le levier de déclenchement (6.2) est monté à une extrémité de manière pivotante sur un axe de rotation fixe (7.1), ce levier de déclenchement (6.2) comportant à son autre extrémité une région de contact (12) destinée à coopérer avec un deuxième levier, levier d'actionnement (9.2), le levier d'actionnement (9.2) étant monté à une extrémité de manière pivotante sur un axe de rotation fixe (10.2) et étant relié fonctionnellement à son autre extrémité au moyen d'actionnement (2) et le levier d'actionnement (9.2) comportant une région de contact homologue correspondante (14).

7. Dispositif selon une ou plusieurs des revendications précédentes,
- **caractérisé en ce que**
- le mécanisme à levier (5.1, 5.2) est disposé complètement à l'intérieur du boîtier (20).

8. Dispositif selon une ou plusieurs des revendications précédentes,
- **caractérisé en ce que**
- le logement (20) comporte dans ses parois (26, 28) plusieurs évidements de coussinet de pivotement destinés aux axes de rotation (10.1, 10.2, 7.1, 7.2) et/ou les leviers de l'ensemble à levier (5.1, 5.2) comportent plusieurs évidements de sorte que des ensembles à levier puissent être positionnés en rotation de manière simple à l'intérieur du boîtier (20) avec différentes capacités de multiplication ou de démultiplication.
